# FASCICULE DE BREVET EUROPEEN

(11) **EP 0 468 858 B1**
(45) Date de publication et mention de la délivrance du brevet: **15.10.1997**
(21) Numéro de dépôt: 91401994.8
(22) Date de dépôt: 17.07.1991
(51) Int. Cl.: B26F 3/12, B23Q 1/56, B23Q 1/01

(54) **Installation pour couper des blocs et des plaques de matériaux synthétiques cellulaires**
Vorrichtung zum Schneiden von Blöcken und Platten aus expandierten synthetischen Werkstoffen
Device for cutting blocks and plates of expanded synthetic materials

(43) Date de publication de la demande: 29.01.1992
(73) Titulaire: CROMA SARL, F-75012 Paris (FR)
(72) Inventeur: Crouet, Jacques, F-75012 Paris (FR); Malapert, Philippe, F-85210 Saint Juire (FR)
(74) Mandataire: Hammond, William

(56) Documents cités:
- EP-A- 0 097 992
- DE-A- 2 112 289
- DE-A- 3 207 873
- DE-U- 8 707 747
- US-A- 4 018 117
- US-A- 4 683 791

## Description

La présente invention concerne une installation selon le préambule de la revendication 1.

La méthode la plus couramment utilisée à ce jour est celle de la découpe manuelle par un fil chaud. Cette méthode permet de réaliser toutes formes à partir d'un gabarit posé sur la plaque à découper, cependant elle demande une bonne expérience de l'opérateur, elle ne donne pas une coupe régulière et n'est pas applicable pour des grandes séries.

Par suite, il a été proposé (cf. DE-U-8707747) de réaliser cette découpe par fil chaud piloté et asservi par des moteurs. Le fil était maintenu au bout de deux tiges parallèles horizontales, la plaque de polystyrène étant fixe et entre ces deux tiges.

De nombreux problèmes se posent lors de la mise en oeuvre d'un tel procédé. En effet, on se trouve très vite limité par la dimension maximum découpable du fait que les deux tiges ne peuvent pas avoir une longueur trop importante au risque d'un manque de rigidité. D'autre part, la position horizontale des plaques fait que par leur poids les pièces découpées tombent et gênent la découpe.

Ce dernier inconvénient peut être résolu par une machine où la plaque à découper est en position verticale mais on est toujours limité en dimension et la fixation de la plaque n'est pas aisée.

D'après le document US-A-4.683.791, on connaît déjà une installation pour découper des panneaux en matière plastique cellulaire. Cette installation possède les caractéristiques exposées dans le préambule de la revendication 1.

L'invention vise un système perfectionné. Elle propose à cet effet une installation ayant les caractéristiques de la partie caractérisante de la revendication, qui permet, notamment d'obtenir un volume découpable de grande dimension dans lequel le fil chaud ne rencontre aucun obstacle. Par ailleurs, grâce à un système de refroidissement, faisant partie d'un mode de réalisation préféré de la présente invention, il a été constaté que l'installation selon l'invention permettait d'obtenir des flancs de découpe nets et lisses et qu'il était possible de découper simultanément un nombre important de plaques pour produire des pièces identiques.

Avantageusement et en pratique :
- le fil chauffé par effet résistif à l'aide d'une basse tension est fixé sur deux chariots qui se déplacent simultanément sur les deux côtés d'un cadre, d'où un déplacement sur un axe Y.
- Ce cadre est lui-même fixé sur deux chariots se déplaçant horizontalement par deux moteurs synchronisés, d'où un déplacement sur un axe X.
- Les plaques à découper sont posées verticalement et maintenues sur un plateau horizontal à l'intérieur du cadre mobile et du cadre fixe.
- Le système à partir de la digitalisation des formes jusqu'à la commande des moteurs est géré par ordinateur.

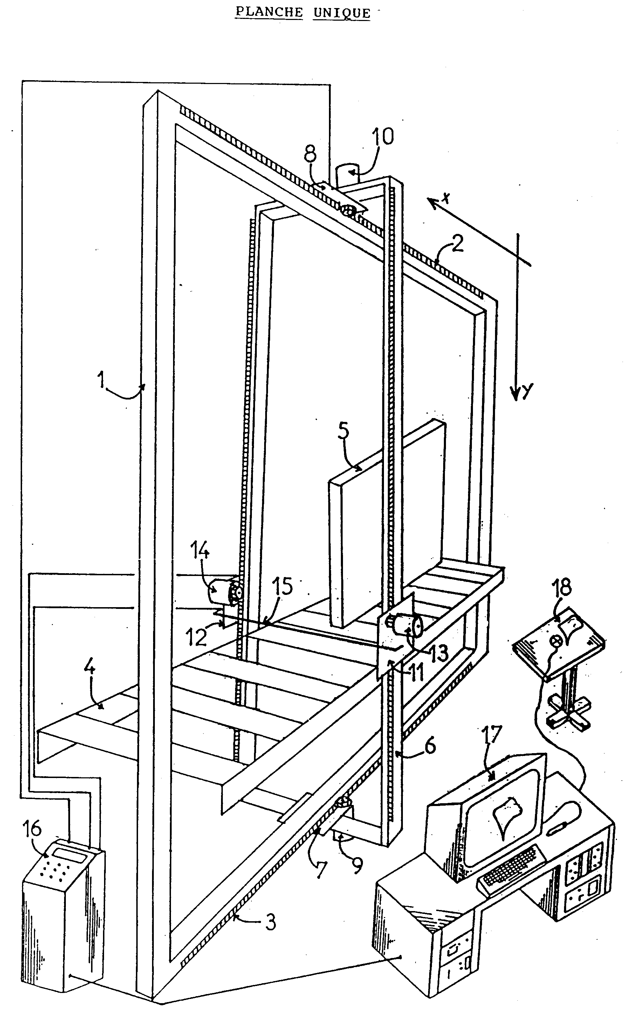

L'invention et les avantages qu'elle apporte seront cependant mieux compris grâce à l'exemple de réalisation donné ci-après à titre indicatif mais non limitatif et qui est illustré par la figure annexée qui est une vue en perspective, partiellement éclatée, d'une installation conforme à l'invention.

Si l'on se reporte à cette figure, l'installation selon l'invention permettant de découper des plaques de matières plastiques cellulaires au moyen d'un fil chaud se compose essentiellement :
- D'un cadre fixe (1) sur lequel sont fixé sur les parties horizontales supérieures hautes et inférieures basses des rails de guidage non représentés par mesure de simplification.
- Parallèlement à ces rails de guidage sont fixées des crémaillères (2) et (3) sur le côté.
- Sur les deux montants verticaux, un plateau (4) est fixé horizontalement; Sa position peut être réglée suivant la dimension des plaques à découper. Ce plateau supporte la ou les plaques (5) qui seront en position verticale.
- Un cadre mobile (6) fixé sur des glissières (7) et (8) qui se déplacent sur les rails de guidage horizontaux du cadre fixe (1).
- Deux moteurs Pas à Pas (9) et (10) sont fixés sur chacune des deux glissières. Un pignon sur leur axe attaque directement les crémaillères. Ces moteurs tournant en sens inverse sont synchronisés par un dispositif de commande (16) pour faire avancer le cadre mobile (6) suivant l'axe X.
- Deux autres rails de guidage non représentés par mesure de simplification sont fixés sur les deux côtés verticaux du cadre mobile (6).
- Deux glissières (11) et (12) équipées de deux moteurs Pas à Pas (13) et (14) se déplacent par le même procédé que les glissières (7) et (8) . Elles assurent le déplacement sur l'axe Y.
- Un fil chaud (15) en tungstène joint les glissières (11) et (12). Il est chauffé par effet Joule à partir du dispositif de commande (16).
- Une lame souple en acier non représentée, perpendiculaire au fil, maintient le fil (15). En cas de résistance lors du déplacement du fil, la lame se déforme et actionne un contact qui arrête la chauffe du fil par coupure de son alimentation basse tension ainsi que la commande des moteurs.
- Par des tuyaux souples, de l'air comprimé est disponible sur chacune des glissières (11) et (12). Cet air est dirigé par un tube (non représenté) sur les deux parties du fil ne se trouvant pas dans la matière plastique cellulaire lors de la découpe. Cet air, par son effet de refroidissement, assure une température régulière du fil sur toute sa longueur dans le matériau à découper et dans l'air. La coupe est ainsi parfaitement nette et la durée de vie du fil extrêmement prolongée.

Les moteurs, la chauffe et la ventilation du fil sont commandés par un ordinateur (17)

Le dessin de la forme à découper est fait par un logiciel spécialisé du commerce notamment à l'aide d'une table à numériser (18). Le fichier obtenu est traité par un autre logiciel dédié à cette machine de découpe et tenant compte des spécificités d'une découpe par fil chaud. Puis ce logiciel assure le pilotage sur les axes X et Y des moteurs Pas à Pas.

## Revendications

1. Installation pour découper des panneaux en matière plastique cellulaire du genre comprenant un cadre mobile perpendiculaire à un cadre fixe (1) et se déplaçant sur le cadre fixe et guidé par celui-ci ; le cadre fixe (1) disposé sensiblement verticalement comportant des rails de guidage horizontaux caractérisé par le fait que
- le cadre mobile (6) est mobile horizontalement et comporte deux rails guides verticaux disposés de part et d'autre du cadre fixe (1), chacun d'eux étant muni d'une crémaillère ; et par le fait qu'elle comprend
- deux glissières (7, 8) étant respectivement fixées à la partie inférieure et à la partie supérieure du cadre mobile (6), chacune d'elle étant équipée d'un moteur pas à pas (9, 10 respectivement) dont le pignon coopère avec une crémaillère (2, 3) correspondante ;
- deux glissières (11, 12) étant respectivement montées sur un des rails de guidage vertical du cadre mobile (6), chacune d'elles étant équipée d'un moteur pas à pas (13, 14 respectivement) dont le pignon coopère avec la crémaillère correspondante ;
- un fil chaud (15) tendu entre les deux glissières (11, 12) monté sur les rails guides verticaux;
- un plateau horizontal disposé entre les deux rails guides verticaux du cadre mobile (6) et les deux rails de guidage horizontaux du cadre fixe (1) ; et,
- un ordinateur pour commander ladite installation ; et
- le cadre fixe (1) étant situé dans le cadre mobile (6) de telle sorte que le fil chaud (15) se déplace sans obstacle dans le volume enveloppé par :
a) l'intérieur du cadre mobile (6) dans son déplacement par rapport au cadre fixe (1),
b) l'intérieur du cadre fixe (1), et
c) le plateau horizontal (4).

2. Installation selon la revendication 1, caractérisée par le fait sur les rails de guidage verticaux se déplacent dans deux plans parallèles le long du cadre fixe (1), définissant des plans verticaux parallèles entre eux et à ces deux plans parallèles.

3. Installation selon la revendication 1, caractérisée par le fait que les moteurs pas à pas (9, 10) entraînant le cadre mobile sont montés en opposition et tournent de la même façon mais dans des sens contraires.

4. Installation selon la revendication 1, caractérisée par le fait que chacun des moteurs pas à pas sont pilotés par l'ordinateur (17).

5. Installation selon la revendication 1, caractérisée par le fait que les cadres fixe (1) et mobile (6) sont réalisés dans du profilé d'aluminium standard ayant à la fois une fonction de structure et une fonction mécanique pour le guidage de glissières (7, 8, 11, 12).

6. Installation selon la revendication 5, caractérisée par le fait que les crémaillères sont réalisées par collage de plusieurs éléments de crémaillère directement sur le profilé d'aluminium.

7. Installation selon la revendication 1, caractérisée par le fait que le plateau (4) est réglable en hauteur pour recevoir et maintenir une ou plusieurs plaques (5) à découper.

8. Installation selon l'une des revendications 1 à 7, caractérisée par le fait qu'elle comprend, en outre, un système de gaz comprimé qui se déplace avec le fil chaud (15) pour le refroidir et maintenir la température dudit fil uniforme sur toute la longueur de ce dernier.

9. Installation selon l'une des revendications 1 à 7, caractérisée par le fait qu'elle comprend des ventilateurs fixés sur les glissières (11, 12) pour refroidir le fil (15) et maintenir la température dudit fil uniforme sur toute sa longueur.

10. Installation selon la revendication 1, caractérisée par le fait que le fil chaud (15) montés entre les glissières (11, 12) tire sur une languette en acier qui maintient une tension mécanique constante du fil (15) malgré la dilatation due à l'élévation de température.

11. Installation selon la revendication 10, caractérisée par le fait qu'elle comprend aussi un contact qui détecte une déformation trop importante de la languette et fait couper la chauffe du fil (15) et la rotation des moteurs pas à pas.

## Claims

1. Apparatus for cutting panels of cellular plastic material of the type comprising a mobile frame perpendicular to a fixed frame (1) and moving on the fixed frame and guided by the latter; the fixed frame (1) arranged substantially vertically comprising horizontal guide rails, characterised in that
- the mobile frame (6) is mobile horizontally and comprises two vertical guide rails arranged on each side of the fixed frame (1), each of them being provided with a rack; and in that it comprises
- two slides (7, 8) being respectively fixed to the lower part and to the upper part of the mobile frame (6), each of them being equipped with a stepper motor (9, 10 respectively), the pinion of which cooperates with a corresponding rack (2, 3);
- two slides (11, 12) being respectively mounted on one of the vertical guide rails of the mobile frame (6), each of them being equipped with a stepper motor (13, 14 respectively), the pinion of which cooperates with the corresponding rack;
- a hot wire (15) stretched between the two slides (11, 12) mounted on the vertical guide rails;
- a horizontal table arranged between the two vertical guide rails of the mobile frame (6) and the two horizontal guide rails of the fixed frame (1); and
- a computer to control the said apparatus; and
- the fixed frame (1) being situated in the mobile frame (6) such that the hot wire (15) moves without obstacle in the volume enclosed by:
a) the interior of the mobile frame (6) in its displacement with respect to the fixed frame (1),
b) the interior of the fixed frame (1), and
c) the horizontal table (4).

2. Apparatus according to Claim 1, characterised in that the vertical guide rails move on two parallel planes along the fixed frame (1), defining vertical planes parallel to each other and to these two parallel planes.

3. Apparatus according to Claim 1, characterised in that the stepper motors (9, 10) entraining the mobile frame are mounted in opposition and turn in the same manner but in opposite directions.

4. Apparatus according to Claim 1, characterised in that each of the stepper motors is guided by the computer (17).

5. Apparatus according to Claim 1, characterised in that the fixed frame (1) and mobile frame (6) are produced in standard aluminium section, having both a structural function and a mechanical function for the guiding of slides (7, 8, 11, 12).

6. Apparatus according to Claim 5, characterised in that the racks are produced by sticking several rack elements directly on the aluminium section.

7. Apparatus according to Claim 1, characterised in that the table (4) is adjustable in height to receive and hold one or more plates (5) which are to be cut.

8. Apparatus according to one of Claims 1 to 7, characterised in that it comprises, in addition, a compressed gas system which moves with the hot wire (15) to cool it and keep the temperature of the said wire uniform over the entire length of the latter.

9. Apparatus according to one of Claims 1 to 7, characterised in that it comprises fans fixed on the slides (11, 12) to cool the wire (15) and keep the temperature of the said wire uniform over its entire length.

10. Apparatus according to Claim 1, characterised in that the hot wire (15), mounted between the slides (11, 12) pulls on a steel tongue which maintains a constant mechanical tension of the wire (15) despite the expansion due to the rise in temperature.

11. Apparatus according to Claim 10, characterised in that it also comprises a contact which detects too great a deformation of the tongue and cuts off the heating of the wire (15) and the rotation of the stepper motors.

## Patentansprüche

1. Anordnung zum Schneiden von Platten aus einem geschlossenzelligen Kunststoffmaterial einer Art mit einem beweglichen Rahmen senkrecht zu einem festen Rahmen (1), der sich am festen Rahmen verschiebt und durch diesen geführt ist, welcher feste Rahmen (1), der im wesentlichen vertikal angeordnet ist, horizontale Führungsschienen umfaßt, dadurch gekennzeichnet, daß
- der bewegliche Rahmen (6) horizontal beweglich ist und zwei vertikale Führungsschienen umfaßt, die auf der einen und der anderen Seite des festen Rahmens (1) angeordnet sind und von denen jede mit einer Zahnleiste versehen ist, und daß sie
- zwei Gleitschienen (7, 8), die jeweils am unteren und am oberen Teil des beweglichen Rahmens (6) angebracht sind, und von denen jede mit einem Schrittmotor (9, 10 jeweils) ausgerüstet ist, dessen Ritzel mit einer entsprechenden Zahnleiste (2, 3) zusammenarbeitet,
- zwei Gleitschienen (11, 12), die jeweils an den vertikalen Führungsschienen des beweglichen Rahmens (6) angebracht sind, von denen jede mit einem Schrittmotor (13, 14 jeweils) ausgerüstet ist, dessen Ritzel mit der entsprechenden Zahnleiste zusammenarbeitet,
- ein heißen Draht (15), der zwischen den beiden Gleitschienen (11, 12) gespannt ist, die an den vertikalen Führungsschienen befestigt sind,
- eine horizontale Plattform, die zwischen den beiden vertikalen Führungsschienen des beweglichen Rahmens (6) und den beiden horizontalen Führungsschienen des festen Rahmens (1) angeordnet ist, und
- eine Datenverarbeitungsanlage umfaßt, um die Anordnung zu steuern, und
- der feste Rahmen (1) im beweglichen Rahmen (6) derart angeordnet ist, daß der heiße Draht (15) sich ohne Widerstand in dem Volumen bewegt, das durch
a) das Innere des beweglichen Rahmens (6) bei seiner Versetzung gegenüber dem festen Rahmen (1),
b) das Innere des festen Rahmens (1) und
c) die horizontale Plattform (4) umschlossen ist.

2. Anordnung nach Anspruch 1, dadurch gekennzeichnet, daß sich die vertikalen Führungsschienen in zwei parallelen Ebenen längs des festen Rahmens (1) versetzen, wodurch sie dazwischen und zwischen den beiden parallelen Ebenen parallele vertikale Ebenen bilden.

3. Anordnung nach Anspruch 1, dadurch gekennzeichnet, daß die Schrittmotoren (9, 10), die den beweglichen Rahmen antreiben, einander gegenüber angeordnet sind und sich in derselben Weise, jedoch im umgekehrten Sinn, drehen.

4. Anordnung nach Anspruch 1, dadurch gekennzeichnet, daß jeder Schrittmotor von der Datenverarbeitungsanlage (17) gesteuert wird.

5. Anordnung nach Anspruch 1, dadurch gekennzeichnet, daß der feste Rahmen (1) und der bewegliche Rahmen (6) aus einem Standardaluminiumprofil bestehen, das sowohl eine konstruktive Funktion als auch eine mechanische Funktion zum Führen der Gleitschienen (7, 8, 11, 12) hat.

6. Anordnung nach Anspruch 5, dadurch gekennzeichnet, daß die Zahnleisten durch Aufkleben von mehreren Zahnleistenelementen direkt auf das Aluminiumprofil gebildet sind.

7. Anordnung nach Anspruch 1, dadurch gekennzeichnet, daß die Plattform (4) in ihrer Höhe einstellbar ist, um eine oder mehrere zu schneidende Platten (5) aufzunehmen und zu halten.

8. Anordnung nach einem der Ansprüche 1 bis 7, dadurch gekennzeichnet, daß sie außerdem ein Druckgassystem umfaßt, das sich mit dem heißen Draht (15) versetzt, um diesen Draht zu kühlen und seine Temperatur über die gesamte Länge gleichmäßig zu halten.

9. Anordnung nach einem der Ansprüche 1 bis 7, dadurch gekennzeichnet, daß sie Belüftungen umfaßt, die an den Gleitschienen (11, 12) befestigt sind, um den Draht (15) zu kühlen und die Temperatur dieses Drahtes über seine gesamte Länge gleichmäßig zu halten.

10. Anordnung nach Anspruch 1, dadurch gekennzeichnet, daß der heiße Draht (15), der zwischen den Gleitschienen (11, 12) angebracht ist, auf einer Stahlfeder läuft, die eine konstante mechanische Spannung des Drahtes (15) aufrechterhält, und zwar trotz der Wärmedehnung aufgrund einer Temperaturzunahme.

11. Anordnung nach Anspruch 10, dadurch gekennzeichnet, daß sie außerdem einen Kontakt umfaßt, der eine zu große Verformung der Feder erfaßt und die Heizung des Drahtes (15) und die Drehung der Schrittmotoren unterbricht.
